# EUROPÄISCHE PATENTSCHRIFT

(11) **EP 3 982 023 B1**
(45) Veröffentlichungstag und Bekanntmachung des Hinweises auf die Patenterteilung: **11.09.2024**
(21) Anmeldenummer: 21198703.7
(22) Anmeldetag: 24.09.2021
(51) Int. Cl.: F16K 31/56, F16K 31/06

(54) **MAGNETVENTIL**
SOLENOID VALVE
SOUPAPE ÉLECTROMAGNÉTIQUE

(30) Priorität: 07.10.2020 DE 102020126170
(43) Veröffentlichungstag der Anmeldung: 13.04.2022
(73) Patentinhaber: ZF CV Systems Europe BV, 1170 Brussels (BE)
(72) Erfinder: KNOKE, Stefan, 30657 Hannover (DE)
(74) Vertreter: Ohlendorf, Henrike

(56) Entgegenhaltungen:
- EP-A1- 2 818 779
- DE-A1- 102016 201 081

## Beschreibung

Die Erfindung betrifft ein Magnetventil, das ein Gehäuse, einen Elektromagneten mit einer Spule, einen Anker und eine Rückstellfeder für den Anker umfasst.

Magnetventile dieser Art werden häufig in Lastkraftfahrzeugen verwendet, beispielsweise für Luftfederungseinrichtungen, Getriebebremseinheiten und Kupplungssteuergeräten. Bei Kupplungssteuergeräten und Getriebebremseinheiten werden hierbei häufig Ventile mit unterschiedlichen nominellen Breiten benötigt. Für solche Anwendungen werden daher verschiedene Magnetventile verwendet, typischerweise zwei Ventile mit unterschiedlichem Durchfluss.

DE102016201081A1 betrifft ein Elektromagnetventil, insbesondere für schlupfgeregelte Kraftfahrzeug-Bremsanlagen, mit einem in einem Ventilgehäuse angeordneten Ventilschließglied, das einen Ventildurchlass in einem Ventilsitz zu öffnen oder zu verschließen vermag.

EP2818779A1 betrifft Magnetventil, umfassend ein Gehäuse, das einen Einlass und einen Auslass aufweist, wobei das Magnetventil ferner ein Ventilelement und eine Öffnung umfasst, wobei die Öffnung einen Öffnungseinlass und einen Öffnungsauslass umfasst, und wobei die Öffnung in einer Membran bereitgestellt ist, die Öffnung ein Verteilereigenschaft in einer Richtung von dem Öffnungseinlass zum Öffnungsauslass aufweist.

Es besteht somit ein Bedarf für ein Magnetventil, dessen Durchfluss veränderbar ist.

Aufgabe der Erfindung ist es daher, ein derartiges Magnetventil anzugeben.

Diese Aufgabe wird durch ein Magnetventil gemäß Anspruch 1 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft ein Magnetventil, das ein Gehäuse, einen Elektromagneten mit einer Spule und einem Kern, einen Anker und eine Rückstellfeder für den Anker umfasst, wobei das Gehäuse einen Ventileinlass und einen Ventilauslass aufweist und der Anker durch eine Bestromung der Spule innerhalb des Gehäuses verschiebbar ist zum Öffnen oder Schließen des Magnetventils. Die Rückstellfeder weist hierbei mindestens einen ersten Bereich mit einer ersten Federkonstante und einen zweiten Bereich mit einer zweiten Federkonstante auf, wobei die Federkonstante des zweiten Bereichs größer ist als die Federkonstante des ersten Bereichs.

In einer vorteilhaften Variante ist die Rückstellfeder als eine Druckfeder, insbesondere als eine Schraubenfeder, ausgestaltet.

In einer anderen vorteilhaften Variante weist die Rückstellfeder mehr als ersten und zweiten Bereichen auf, wobei jeder Bereich wenigstens eine einzigartige Federkonstante hat.

In einem bevorzugten Ausführungsbeispiel ist die Rückstellfeder als eine zylinderförmige Schraubenfeder ausgebildet mit einem zylinderförmigen ersten Bereich und einem zylinderförmigen zweiten Bereich, und der erste zylinderförmige Bereich weist die erste Federkonstante und der zweite zylinderförmige Bereich weist die zweite Federkonstante auf. Der erste Bereich der Rückstellfeder weist hierbei insbesondere einen ersten Durchmesser und eine erste Länge auf und der zweite Bereich der Rückstellfeder weist einen zweiten Durchmesser und eine zweite Länge auf, wobei der erste Durchmesser kleiner ist als der zweite Durchmesser.

Erfindungsgemäß weist der Anker einen Hohlraum auf, in dem die Rückstellfeder zumindest teilweise angeordnet ist. Der Hohlraum ist zylinderförmig ausgestaltet mit einem inneren Bereich und einem äußeren Bereich und der innere Bereich weist hierbei einen kleineren Durchmesser auf als der äußere Bereich.

In einer weiteren vorteilhaften Variante ist die Rückstellfeder mit ihrem ersten Bereich voran in den Hohlraum des Ankers eingesetzt und berührt mit ihrem anderen Ende den Kern des Magnetventils.

In einem weiteren bevorzugten Variante sind der Anker und die Rückstellfeder derart dimensioniert, dass die Länge des inneren Bereichs des Hohlraums kleiner ist als die Länge des ersten Bereichs der Rückstellfeder, die Länge des äußeren Bereichs des Hohlraums größer ist als die Länge des zweiten Bereichs der Rückstellfeder, der Durchmesser des inneren Bereichs des Hohlraums größer ist als der Durchmesser des ersten Bereichs der Rückstellfeder, der Durchmesser des äußeren Bereichs des Hohlraums größer ist als der Durchmesser des zweiten Bereichs der Rückstellfeder, und der Durchmesser des inneren Bereichs des Hohlraums kleiner ist als der Durchmesser des zweiten Bereichs der Rückstellfeder.

Erfindungsgemäß weist das Magnetventil mindestens einen Betriebszustand auf, in dem es teilweise geöffnet ist, und in dem nur der erste Bereich der Rückstellfeder vollständig in den inneren Bereich des Hohlraums geschoben ist, und weist einen Betriebszustand auf, in dem es vollständig geöffnet ist, und in dem der erste Bereich der Rückstellfeder vollständig in den inneren Bereich des Hohlraums geschoben ist und der zweite Bereich der Rückstellfeder vollständig in den äußeren Bereich des Hohlraums geschoben ist.

In einem weiteren bevorzugten Ausführungsbeispiel sind der Anker und die Rückstellfeder zylindersymmetrisch zu einer Achse ausgestaltet.

Das Magnetventil nach der Erfindung ist daher ein durch Strom gesteuertes Ventil, das mindestens einen Betriebszustand aufweist, in dem es nur teilweise geöffnet ist. Das Magnetventil nach der Erfindung kann daher zwei einfache Magnetventile ersetzen. In bekannten Magnetventilen ist es aufgrund seiner magnetischen Struktur nicht möglich, den Hub des Ankers durch Strom zu steuern. Magnetventile mit teilweise geöffneten Betriebszuständen sind auch als Proportionalventile bekannt, diese sind jedoch viel größer und benötigen ein kostenintensives Design des Ankers und weisen zudem einen hohen Stromverbrauch auf.

Durch die Verwendung einer Rückstellfeder mit mehr als zwei unterschiedlichen Federkonstanten können nach der Erfindung auch Magnetventile mit mehreren teilweise geöffneten Betriebszuständen konstruiert werden, für die je nach Design der Rückstellfeder ein definierter Durchfluss vorgegeben werden kann.

Vorteilhafte Ausführungsbeispiele der Erfindung sind in den Zeichnungen schematisch dargestellt und werden nachfolgend anhand der Figuren näher erläutert.

Es zeigen:
Fig. 1 ein Magnetventil gemäß der Erfindung in einem Querschnitt;
Fig. 2 einen Anker und eine Rückstellfeder des Magnetventils der Fig. 1 in einem Querschnitt;
Fig. 3 die Rückstellfeder der Fig. 2 in einem Querschnitt;
Fig. 4 ein Diagramm zur Illustration der Funktionsweise des Magnetventils 1,
Fig. 5 ein Diagramm zur Darstellung eines beispielhaften Betriebs des Magnetventils,
Fig. 6 das Magnetventil der Fig. 1 in einem teilweise geöffneten Zustand in einem Querschnitt, und
Fig. 7 das Magnetventil der Fig. 1 in einem vollständig geöffneten Zustand in einem Querschnitt.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

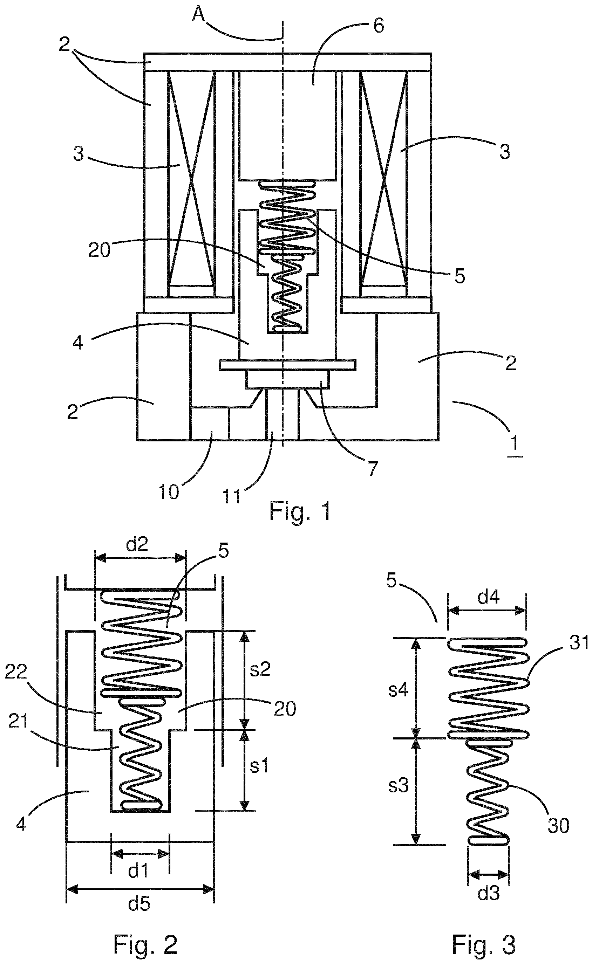

In der Fig. 1 ist schematisch ein Magnetventil 1 in einem Querschnitt dargestellt, dass ein Gehäuse 2, eine Spule 3, einen Anker 4, eine Rückstellfeder 5 und einen Kern 6 aufweist, sowie einen Ventileinlass 10 und einen Ventilauslass 11. Das Gehäuse 2, die Spule 3, der Anker 4, die Rückstellfeder 5 und der Kern 6 sind vorzugsweise zylindersymmetrisch zu einer Achse A ausgestaltet. Der Anker 4 ist beispielsweise aus einem ferromagnetischen Material und die Spule 3 und der Kern 6 haben die Funktion eines Elektromagneten zur Anziehung des Ankers 4, wenn die Spule 3 bestromt wird.

Die Rückstellfeder 5 ist insbesondere eine Druckfeder, in diesem Ausführungsbeispiel beispielsweise eine zylinderförmige Schraubenfeder, die bewirkt, dass das Magnetventil 1 in einer Grundstellung geschlossen ist. Die Rückstellfeder 5 ist hierbei zu einem wesentlichen Teil in einem Hohlraum 20 innerhalb des Ankers 4 angeordnet und drückt den Anker 4 in der Grundstellung auf den Ventilauslass 11. Der Ventilauslass 11 ist in diesem Ausführungsbeispiel ebenfalls axialsymmetrisch angeordnet, und der Anker 4 weist zur Abdichtung des Ventilauslasses 11 an der dem Hohlraum 20 abgewandten Seite eine Ventilsitzdichtung 7 auf, so dass das Magnetventil 1 in der Grundstellung durch die Ventilsitzdichtung 7 abgedichtet ist.

Wird das Magnetventil betätigt, indem die Spule 3 bestromt wird, so wird der Anker 4 in Richtung des Kerns 6 bewegt und hierdurch das Magnetventil 1 geöffnet, so dass ein Medium, beispielsweise Druckluft, hindurchströmen kann. Der Kern 6 besteht aus einem magnetisierbaren Material und bewirkt hierbei eine Fokussierung des durch die Spule 3 erzeugten Magnetfelds für eine Anziehung des Ankers 4, wenn die Spule 3 bestromt wird. Wird der Strom nachfolgend durch die Spule 3 abgeschaltet, so bewegt sich der Anker 4 durch die Kraftausübung der Rückstellfeder 5 wieder in seine Grundstellung, in der das Magnetventil 1 geschlossen ist.

Weitere Einzelheiten zu dem Aufbau des Ankers 4 und der Rückstellfeder 5 werden nachfolgend anhand der Figuren 2 und 3 näher erläutert. Der in der Fig. 2 dargestellte Anker 4 weist einen zylinderförmigen Hohlraum 20 auf, in den die Rückstellfeder 5 zu einem wesentlichen Teil eingesetzt ist. Der Hohlraum 20 weist einen zylinderförmigen inneren Bereich 21 mit einer Länge s1 und einen zylinderförmigen äußeren Bereich 22 mit einer Länge s2 auf, wobei der Durchmesser d2 des äußeren Bereichs 22 größer ist als der Durchmesser d1 des inneren Bereichs 21. Die äußere Form des Ankers 4 entspricht einem Zylinder mit einem Durchmesser d5.

Die in der Fig. 3 dargestellte Rückstellfeder 5 weist einen ersten Bereich 30 mit einer Länge s3 und einem Durchmesser d3 auf und einen zweiten Bereich 31 mit einer Länge s4 und einem Durchmesser d4 auf, wobei der Durchmesser d3 des ersten Bereichs 30 kleiner ist als der Durchmesser d4 des zweiten Bereichs 31. Die Rückstellfeder 5 ist in diesem Ausführungsbeispiel als eine zylinderförmige Schraubenfeder ausgebildet mit der Funktion einer Druckfeder. Die beiden Bereiche 30, 31 sind beispielsweise aus einem Federdraht mit einem konstanten Durchmesser hergestellt. Hierdurch weist der Bereich 30 der Rückstellfeder 5 eine kleinere Federkonstante als der Bereich 31 auf.

Der Anker 4 und die Rückstellfeder 5 sind hierbei derart dimensioniert, dass die Länge s1 des inneren Bereichs 21 des Hohlraums 20 kleiner ist als die Länge s3 des ersten Bereichs 30 der Rückstellfeder 5, die Länge s2 des äußeren Bereichs 22 des Hohlraums 20 größer ist als die Länge s4 des zweiten Bereichs 31 der Rückstellfeder 5, der Durchmesser d1 des inneren Bereichs 21 des Hohlraums 20 größer ist als der Durchmesser d3 des ersten Bereichs 30 der Rückstellfeder 5, der Durchmesser d2 des äußeren Bereichs 22 des Hohlraums 20 größer ist als der Durchmesser d4 des zweiten Bereichs 31 der Rückstellfeder 5, und der Durchmesser d1 des inneren Bereichs 21 des Hohlraums 20 kleiner als der Durchmesser d4 des zweiten Bereichs 31 der Rückstellfeder 5 ist.

Die Rückstellfeder 5 ist mit ihrem ersten Bereich 30 voran in den Hohlraum 20 des Ankers 4 eingesetzt und berührt den Anker 4 am Ende des inneren Bereichs 21, und die Rückstellfeder 5 berührt mit ihrem anderen Ende den Kern 6, wie in der Fig. 1 dargestellt. Hierdurch übt die Rückstellfeder 5 eine Kraft auf den Anker 4 auf, wenn die Spule 3 bestromt wird und hierdurch der Anker 4 in Richtung des Kerns 6 bewegt wird.

Die Rückstellfeder 5 hat hierdurch folgendes Verhalten: Wird das Magnetventil 1 betätigt und die Spule 3 bestromt, so bewegt sich der Anker 4 in Richtung des Kerns 6. Hierbei wird der erste Bereich 30 der Rückstellfeder 5 zusammengedrückt, da die Federkonstante des ersten Bereichs 30 kleiner ist als die Federkonstante des zweiten Bereichs 31, solange, bis die Länge s3 des ersten Bereichs 30 gleich der Länge s1 des inneren Bereichs 21 des Hohlraums 20 ist. Hierdurch ist der erste Bereich 30 der Rückstellfeder 5 vollständig in den inneren Bereich 21 des Hohlraums 20 geschoben.

Aufgrund der größeren Federkonstante ist zum Zusammendrücken des zweiten Bereichs 31 der Rückstellfeder 5 eine deutlich größere Kraft notwendig als für das Zusammendrücken des ersten Bereichs 30. Daher wird nur bei einer ausreichend hohen Stromstärke durch die Spule 3 der zweite Bereich 31 der Rückstellfeder 5 vollständig in den äußeren Bereich 22 des Hohlraums 20 geschoben. Erst dann ist das Magnetventil 1 vollständig geöffnet.

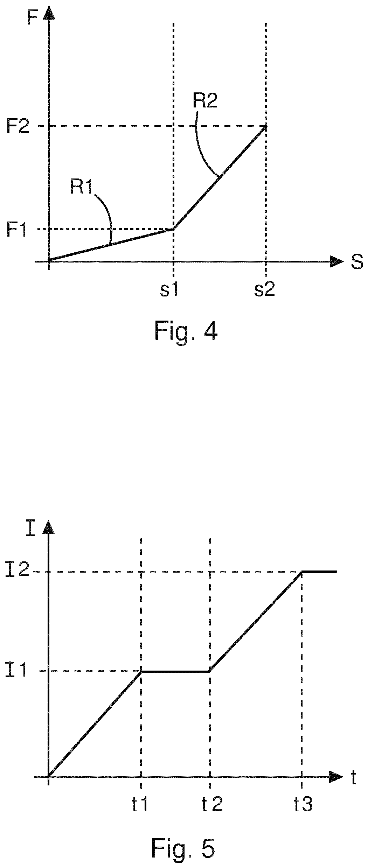

Die Funktionsweise des Magnetventils 1 ist in der Fig. 4 in einem Diagramm dargestellt, in dem eine durch die Spule 3 erzeugte Kraft F gegenüber einer Weglänge s des Ankers 4 aufgetragen ist. Aufgrund der geringeren Federkonstante R1 ist zum Zusammendrücken des ersten Bereichs 30 der Rückstellfeder 5 bis auf die Länge s1 eine verhältnismäßig geringe magnetische Kraft F1 notwendig. Zum Zusammendrücken des zweiten Bereichs 31 ist die Federkonstante R2 der Rückstellfeder 5 wirksam, deshalb ist aufgrund der größeren Federkonstante R2 eine wesentlich größere magnetische Kraft notwendig, um den zweiten Bereich 31 der Rückstellfeder 5 auf eine Länge s2 zusammenzudrücken. Die Kraft F2, die benötigt wird, um den zweiten Bereich 31 der Rückstellfeder 5 vollständig in den äußeren Bereich 22 des Hohlraums 20 zu drücken, beträgt in diesem Ausführungsbeispiel ein Mehrfaches der magnetischen Kraft F1.

Ein beispielhafter Betrieb des Magnetventils 1 ist in der Fig. 5 in einem Diagramm dargestellt, in dem eine Stromstärke I durch die Spule 3 gegenüber einer Zeit t aufgetragen ist. In einer Anfangsphase wird die Stromstärke I durch die Spule 3 des Magnetventils 1 von einem Wert 0 bis auf einen Wert I1 zum Zeitpunkt t1 erhöht, wobei die Stromstärke I1 die magnetische Kraft F1, Fig. 4, in der Spule 3 erzeugt. Die Stromstärke I1 hat hierbei einen Wert, bei dem der erste Bereich 30 der Rückstellfeder 5 vollständig in den inneren Bereich 21 des Hohlraums 20 gedrückt ist, aber der zweite Bereich 31 der Rückstellfeder 5 noch nicht gestaucht ist. Hierdurch ist zum Zeitpunkt t1 das Magnetventil 1 teilweise geöffnet.

Zu einem späteren Zeitpunkt t2 wird die Stromstärke I durch die Spule 3 weiter erhöht, bis auf einen Wert I2 zu einem Zeitpunkt t3. Die Stromstärke I2 ist derart gewählt, dass sie hierbei die magnetische Kraft F2 in der Spule 3 generiert. Die magnetische Kraft F2 ist derart bemessen, dass die Rückstellfeder 5 vollständig in den Hohlraum 20 des Ankers 4 gedrückt ist, wodurch das Magnetventil 1 zum Zeitpunkt t3 vollständig geöffnet ist, wie anhand der Fig. 4 erläutert.

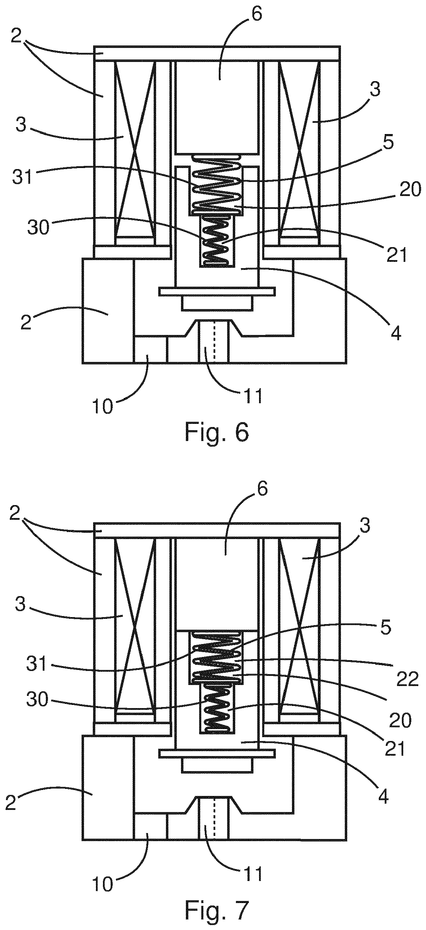

Die vorangehend erläuterten zwei Betriebszustände des Magnetventils 1 sind in den Figuren 6 und 7 anhand eines Querschnitts durch das Magnetventil 1 dargestellt. In der Fig. 6 ist die Spule 3 mit dem Strom I1 bestromt, so dass der erste Bereich 30 der Rückstellfeder 5 vollständig in den inneren Bereich 21 des Hohlraums 20 geschoben ist. Der zweite Bereich 31 der Rückstellfeder 5 ist nicht gestaucht. Das Magnetventil 1 ist hierdurch teilweise geöffnet. In der Fig. 7 ist die Spule 3 mit dem Strom I2 bestromt, so dass der zweite Bereich 31 der Rückstellfeder 5 vollständig in den äußeren Bereich 22 des Hohlraums 20 geschoben ist. Das Magnetventil 1 ist hierdurch vollständig geöffnet. Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt im Rahmen des durch die Ansprüche definierten Schutzumfangs Raum für verschiedene Anpassungen und Modifikationen, die der Fachmann aufgrund seines Fachwissens als auch zu der Offenbarung zugehörend in Betracht ziehen würde. So können beispielsweise anstatt einer Spule 3 zwei Spulen für das Magnetventil 1 verwendet werden, beispielsweise indem in einem Spulenkörper zwei Wicklungen übereinander oder nebeneinander angeordnet sind. Für eine teilweise Öffnung des Magnetventils 1 wird dann beispielsweise eine erste der beiden Wicklungen bestromt und für eine vollständige Öffnung beide Wicklungen. Auch können die Rückstellfeder 5 und der Anker 4 weitere Bereiche mit entsprechenden Durchmessern und Längen aufweisen, so dass das Magnetventil 1 mit mehreren definierten Stellungen, in denen es teilweise geöffnet ist, verwendet werden kann.

### Bezugszeichenliste (Teil der Beschreibung)

- A: Achse
- d1: Durchmesser des inneren Bereichs des Hohlraums 20
- d2: Durchmesser des äußeren Bereichs des Hohlraums 20
- d3: Durchmesser des ersten Bereichs der Rückstellfeder 5
- d4: Durchmesser des zweiten Bereichs der Rückstellfeder 5
- d5: Durchmesser des Ankers 4
- F: Kraft
- F1, F2: Kräfte des Ankers 4
- I, I1, I2: Stromstärken
- R1, R2: Federkonstanten
- s: Länge
- s1: Länge des inneren Bereichs des Hohlraums 20
- s2: Länge des äußeren Bereichs des Hohlraums 20
- s3: Länge des ersten Bereichs der Rückstellfeder 5
- s4: Länge des zweiten Bereichs der Rückstellfeder 5
- t: Zeit
- t1, t2: Zeitpunkte
- 1: Magnetventil
- 2: Gehäuse
- 3: Spule
- 4: Anker
- 5: Rückstellfeder
- 6: Kern
- 7: Ventilsitzdichtung
- 10: Ventileinlass
- 11: Ventilauslass
- 20: Hohlraum
- 21: innerer Bereich des Hohlraums 20
- 22: äußerer Bereich des Hohlraums 20
- 30: erster Bereich der Rückstellfeder 5
- 31: zweiter Bereich der Rückstellfeder 5

## Patentansprüche

1. Magnetventil (1), umfassend: ein Gehäuse (2), einen Elektromagneten mit einer Spule (3) und einem Kern (6), einen Anker (4) und eine Rückstellfeder (5) für den Anker (4), wobei das Gehäuse (2) einen Ventileinlass (10) und einen Ventilauslass (11) aufweist und der Anker (4) durch eine Bestromung der Spule (3) innerhalb des Gehäuses (2) verschiebbar ist zum Öffnen oder Schließen des Magnetventils, wobei die Rückstellfeder (5) mindestens einen ersten Bereich (30) mit einer ersten Federkonstante (R1) und einen zweiten Bereich (31) mit einer zweiten Federkonstante (R2) aufweist, wobei die Federkonstante (R2) des zweiten Bereichs (31) größer ist als die Federkonstante (R1) des ersten Bereichs (30), wobei der Anker (4) einen Hohlraum (20) aufweist, in dem die Rückstellfeder (5) zumindest teilweise angeordnet ist, wobei der Hohlraum (20) zylinderförmig ausgestaltet ist mit einem inneren Bereich (21) und einem äußeren Bereich (22) und der innere Bereich (21) einen kleineren Durchmesser (d1) als der äußere Bereich (22) aufweist, **dadurch gekennzeichnet, dass** das Magnetventil mindestens einen Betriebszustand aufweist, in dem es teilweise geöffnet ist, und in dem nur der erste Bereich (30) der Rückstellfeder (5) vollständig in den inneren Bereich (21) des Hohlraums (20) geschoben ist, und einen Betriebszustand aufweist, in dem es vollständig geöffnet ist, und in dem der erste Bereich (30) der Rückstellfeder (5) vollständig in den inneren Bereich (21) des Hohlraums (20) geschoben ist und der zweite Bereich (31) der Rückstellfeder (5) vollständig in den äußeren Bereich (22) des Hohlraums (20) geschoben ist.

2. Magnetventil (1) nach Anspruch 1, wobei die Rückstellfeder (5) als eine Druckfeder, insbesondere als eine Schraubenfeder, ausgestaltet ist.

3. Magnetventil (1) nach Anspruch 2, wobei die Rückstellfeder (5) als eine zylinderförmige Schraubenfeder ausgebildet ist mit einem zylinderförmigen ersten Bereich (30) und einem zylinderförmigen zweiten Bereich (31) und der zylinderförmige erste Bereich (30) die erste Federkonstante (R1) und der zylinderförmige zweite Bereich (31) die zweite Federkonstante (R2) aufweist.

4. Magnetventil (1) nach Anspruch 3, wobei der erste Bereich (30) der Rückstellfeder (5) einen ersten Durchmesser (d3) und eine erste Länge (s3) aufweist und der zweite Bereich (31) der Rückstellfeder (5) einen zweiten Durchmesser (d4) und eine zweite Länge (s4) aufweist, und wobei der erste Durchmesser (d3) kleiner ist als der zweite Durchmesser (d4).

5. Magnetventil (1) nach Anspruch 1, wobei die Rückstellfeder (5) mit einem Ende voran in den Hohlraum (20) des Ankers (4) eingesetzt ist und mit ihrem anderen Ende einen Kern (6) des Magnetventils (1) berührt.

6. Magnetventil (1) nach Anspruch 1 oder 5, wobei der Anker (4) und die Rückstellfeder (5) derart dimensioniert sind, dass die Länge (s1) des inneren Bereichs (21) des Hohlraums (20) kleiner ist als die Länge (s3) des ersten Bereichs (30) der Rückstellfeder (5), die Länge (s2) des äußeren Bereichs (22) des Hohlraums (20) größer ist als die Länge (s4) des zweiten Bereichs (31) der Rückstellfeder (5), der Durchmesser (d1) des inneren Bereichs (21) des Hohlraums (20) größer ist als der Durchmesser (d3) des ersten Bereichs (30) der Rückstellfeder (5), der Durchmesser (d2) des äußeren Bereichs (22) des Hohlraums 20 größer ist als der Durchmesser d4 des zweiten Bereichs (31) der Rückstellfeder (5), und der Durchmesser (d1) des inneren Bereichs (21) des Hohlraums 20 kleiner als der Durchmesser (d4) des zweiten Bereichs (31) der Rückstellfeder (5) ist.

7. Magnetventil (1) nach einem der vorangehenden Ansprüche, wobei der Anker (4) und die Rückstellfeder (5) zylindersymmetrisch zu einer Achse (A) ausgestaltet sind.

## Claims

1. Solenoid valve (1), comprising: a housing (2), an electromagnet having a coil (3) and a core (6), an armature (4) and a return spring (5) for the armature (4), wherein the housing (2) has a valve inlet (10) and a valve outlet (11) and, by energizing the coil (3), the armature (4) can be moved within the housing (2) in order to open or close the solenoid valve, wherein the return spring (5) has at least a first region (30) having a first spring constant (R1) and a second region (31) having a second spring constant (R2), wherein the spring constant (R2) of the second region (31) is greater than the spring constant (R1) of the first region (30), wherein the armature (4) has a cavity (20) in which the return spring (5) is at least partially arranged, wherein the cavity (20) is cylindrical and has an inner region (21) and an outer region (22) and the inner region (21) has a smaller diameter (d1) than the outer region (22), **characterized in that** the solenoid valve has at least one operating state in which it is partially opened and in which only the first region (30) of the return spring (5) is pushed completely into the inner region (21) of the cavity (20), and has an operating state in which it is fully open and in which the first region (30) of the return spring (5) is pushed completely into the inner region (21) of the cavity (20) and the second region (31) of the return spring (5) is pushed completely into the outer region (22) of the cavity (20).

2. Solenoid valve (1) according to claim 1, wherein the return spring (5) is designed as a compression spring, in particular as a helical spring.

3. Solenoid valve (1) according to claim 2, wherein the return spring (5) is designed as a cylindrical helical spring having a cylindrical first region (30) and a cylindrical second region (31) and the cylindrical first region (30) has the first spring constant (R1) and the cylindrical second region (31) has the second spring constant (R2).

4. Solenoid valve (1) according to claim 3, wherein the first region (30) of the return spring (5) has a first diameter (d3) and a first length (s3) and the second region (31) of the return spring (5) has a second diameter (d4) and a second length (s4), and wherein the first diameter (d3) is smaller than the second diameter (d4).

5. Solenoid valve (1) according to claim 1, wherein one end of the return spring (5) is inserted first into the cavity (20) of the armature (4) and the other end of the return spring touches a core (6) of the solenoid valve (1).

6. Solenoid valve (1) according to claim 1 or 5, wherein the armature (4) and the return spring (5) are dimensioned such that the length (s1) of the inner region (21) of the cavity (20) is smaller than the length (s3) of the first region (30) of the return spring (5), the length (s2) of the outer region (22) of the cavity (20) is greater than the length (s4) of the second region (31) of the return spring (5), the diameter (d1) of the inner region (21) of the cavity (20) is greater than the diameter (d3) of the first region (30) of the return spring (5), the diameter (d2) of the outer region (22) of the cavity 20 is greater than the diameter d4 of the second region (31) of the return spring (5), and the diameter (d1) of the inner region (21) of the cavity 20 is smaller than the diameter (d4) of the second region (31) of the return spring (5).

7. Solenoid valve (1) according to any of the preceding claims, wherein the armature (4) and the return spring (5) are designed to be cylindrically symmetrical with respect to an axis (A).

## Revendications

1. Électrovanne (1), comprenant : un boîtier (2), un électroaimant comportant une bobine (3) et un noyau (6), une armature (4) et un ressort de rappel (5) pour l'armature (4), dans laquelle le boîtier (2) présente une entrée de vanne (10) et une sortie de vanne (11) et l'armature (4) peut être déplacée à l'intérieur du boîtier (2) par une alimentation en courant de la bobine (3) afin d'ouvrir ou de fermer l'électrovanne, dans laquelle le ressort de rappel (5) présente au moins une première zone (30) comportant une première constante de ressort (R1) et une seconde zone (31) comportant une seconde constante de ressort (R2), dans laquelle la constante de ressort (R2) de la seconde zone (31) est supérieure à la constante de ressort (R1) de la première zone (30), dans laquelle l'armature (4) présente une cavité (20) dans laquelle le ressort de rappel (5) est disposé au moins partiellement, dans laquelle la cavité (20) est conçue sous forme cylindrique avec une zone intérieure (21) et une zone extérieure (22) et la zone intérieure (21) présente un diamètre (d1) inférieur à celui de la zone extérieure (22), **caractérisée en ce que** l'électrovanne présente au moins un état de fonctionnement dans lequel elle est partiellement ouverte, et dans lequel seule la première zone (30) du ressort de rappel (5) est entièrement poussée dans la zone intérieure (21) de la cavité (20), et présente un état de fonctionnement dans lequel elle est entièrement ouverte, et dans lequel la première zone (30) du ressort de rappel (5) est entièrement poussée dans la zone intérieure (21) de la cavité (20) et la seconde zone (31) du ressort de rappel (5) est entièrement poussée dans la zone extérieure (22) de la cavité (20).

2. Électrovanne (1) selon la revendication 1, dans laquelle le ressort de rappel (5) est conçu en tant que ressort de compression, en particulier en tant que ressort hélicoïdal.

3. Électrovanne (1) selon la revendication 2, dans laquelle le ressort de rappel (5) est conçu en tant que ressort hélicoïdal de forme cylindrique comportant une première zone (30) de forme cylindrique et une seconde zone (31) de forme cylindrique, et la première zone (30) de forme cylindrique présente la première constante de ressort (R1) et la seconde zone (31) de forme cylindrique présente la seconde constante de ressort (R2).

4. Électrovanne (1) selon la revendication 3, dans laquelle la première zone (30) du ressort de rappel (5) présente un premier diamètre (d3) et une première longueur (s3) et la seconde zone (31) du ressort de rappel (5) présente un second diamètre (d4) et une seconde longueur (s4), et dans laquelle le premier diamètre (d3) est inférieur au second diamètre (d4).

5. Électrovanne (1) selon la revendication 1, dans laquelle le ressort de rappel (5) est inséré avec une extrémité en avant dans la cavité (20) de l'armature (4) et touche avec son autre extrémité un noyau (6) de l'électrovanne (1).

6. Électrovanne (1) selon la revendication 1 ou 5, dans laquelle l'armature (4) et le ressort de rappel (5) sont dimensionnés de telle sorte que la longueur (s1) de la zone intérieure (21) de la cavité (20) est inférieure à la longueur (s3) de la première zone (30) du ressort de rappel (5), la longueur (s2) de la zone extérieure (22) de la cavité (20) est supérieure à la longueur (s4) de la seconde zone (31) du ressort de rappel (5), le diamètre (d1) de la zone intérieure (21) de la cavité (20) est supérieur au diamètre (d3) de la première zone (30) du ressort de rappel (5), le diamètre (d2) de la zone extérieure (22) de la cavité (20) est supérieur au diamètre (d4) de la seconde zone (31) du ressort de rappel (5), et le diamètre (d1) de la zone intérieure (21) de la cavité (20) est inférieur au diamètre (d4) de la seconde zone (31) du ressort de rappel (5).

7. Électrovanne (1) selon l'une des revendications précédentes, dans laquelle l'armature (4) et le ressort de rappel (5) sont conçus avec une symétrie cylindrique par rapport à un axe (A).
